# EUROPÄISCHE PATENTSCHRIFT

(11) **EP 0 828 151 B1**
(45) Veröffentlichungstag und Bekanntmachung des Hinweises auf die Patenterteilung: **25.02.2004**
(21) Anmeldenummer: 97114639.4
(22) Anmeldetag: 23.08.1997
(51) Int. Cl.: G01M 11/06

(54) **Visiereinrichtung für ein Fahrzeugscheinwerferprüfgerät**
Sighting device for a vehicle headlight inspection apparatus
Dispositif de visée pour un appareil d'inspection des phares d'automobiles

(30) Priorität: 09.09.1996 DE 19636526
(43) Veröffentlichungstag der Anmeldung: 11.03.1998
(73) Patentinhaber: Hella KG Hueck & Co., 59552 Lippstadt (DE)
(72) Erfinder: Pähler, Hermann, 33106 Paderborn (DE)

(56) Entgegenhaltungen:
- EP-A- 0 269 734
- DE-B- 1 099 963
- DE-U- 7 727 223
- US-A- 3 843 262

## Beschreibung

Die Erfindung betrifft eine Visiereinrichtung zum Ausrichten der optischen Achse eines ortsveränderlichen Fahrzeugscheinwerferprüfgerätes zu einer Fahrzeuglängsachse mit einem quer zur optischen Achse angeordneten Visier, das mit dem Fahrzeugscheinwerferprüfgerät verbunden ist.

Die Erfindung betrifft weiterhin ein Verfahren zum Ausrichten der optischen Achse eines ortsveränderlichen Fahrzeugscheinwerferprüfgerätes parallel zu einer Fahrzeuglängsachse, bei dem das Fahrzeugscheinwerferprüfgerät vor einem Fahrzeugscheinwerfer positioniert wird und mit einem Visier zwei in einer horizontalen und senkrecht zur Fahrzeuglängsachse verlaufenden Linie liegende Punkte einer Fahrzeugkarosserie anvisiert werden.

Solche Visiereinrichtungen sind aus der DE-GM 77 27 223 und aus der DE 40 25 392 C1 bekannt. Die bekannten Visiereinrichtungen sind an einer vertikalen Säule eines ortveränderlichen Fahrzeugscheinwerferprüfgerätes oberhalb einer optischen Achse eines Optikkastens angeordnet. Die Visiereinrichtung ist in Richtung der Längsachse der vertikalen Säule höhenverstellbar. Die Visiereinrichtung weist einen im rechten Winkel zur optischen Achse und waagerecht angeordneten Visierkörper auf. Der Visierkörper weist zwei parallele gegenüberliegende Sehschlitze auf. Das vor einem Fahrzeugscheinwerfer positionierte Fahrzeugscheinwerferprüfgerät muß mit seiner optischen Achse parallel zu einer Fahrzeuglängsachse ausgerichtet werden. Hierzu werden mit der Visiereinrichtung zwei in einer horizontal und senkrecht zur Fahrzeuglängsachse verlaufenden Linie liegende markante Punkte der Fahrzeugkarosserie anvisiert.

Nachteilig bei den bekannten Visiereinrichtungen ist, daß der seitlich über den Optikkasten hinausragende Visierkörper zwar für einen Scheinwerfer eine günstige Visierposition aufweist, aber bei dem Ausrichten des Fahrzeugscheinwerferprüfgerätes vor dem zweiten Fahrzeugscheinwerfer die Visierposition des Visierkörpers ungünstig ist, da der nunmehr zur Fahrzeugaußenseite über den Optikkasten hinausragende Visierkörper insbesondere zum Anvisieren des dem ersten Fahrzeugscheinwerfer benachbarten Punktes ungünstig angeordnet ist. Dies führt dazu, daß das Ausrichten des zweiten Fahrzeugscheinwerfers zeitaufwendiger und ungenauer ist.

Aufgabe der vorliegenden Erfindung ist es daher, die Visiereinrichtung so zu verbessern, daß das Ausrichten des Fahrzeugscheinwerferprüfgerätes zur Fahrzeuglängsachse bei beiden Fahrzeugscheinwerfern schnell und genau durchführbar ist.

Die Aufgabe wird erfindungsgemäß dadurch gelöst, daß das Visier quer zur optischen Achse in einer horizontalen Ebene verschiebbar ist.

Durch die Verschiebung des Visiers quer zur optischen Achse ist es möglich, daß Visier vor beiden Scheinwerfern in eine zur Fahrzeuglängsachse hin gerichtete Position zu bringen, so daß die den Scheinwerfern benachbarten markanten Punkte jeweils schnell und sicher anvisiert werden können.

Nach einer bevorzugten Ausführungsform der Erfindung weist das Visier einen Visierkörper mit zwei einander gegenüberliegenden Sehschlitzen auf. Zu dem Visierkörper ist in einem Abstand ein parallel verlaufender Achskörper angeordnet, der an seinen Enden über Endstücke mit dem Visierkörper verbunden ist. Der Achskörper ist mit einem ersten Ende eines Halters längsverschieblich und schwenkbar verbunden, wobei der Halter mit seinem dem ersten Ende gegenüberliegenden zweiten Ende mit der vertikalen Säule des Fahrzeugscheinwerferprüfgerätes in vertikaler Richtung verschieblich und in horizontaler Richtung verdrehsicher verbunden ist. Das Visier kann um die Längsachse des Achskörpers verschwenkt werden. Das Visier ist gegenüber dem Halter durch eine Klemmvorrichtung feststellbar. Der Halter ist gegenüber der vertikalen Säule ebenfalls mit einer Klemmvorrichtung feststellbar.

Nach einer weiteren bevorzugten Ausführungsform der Erfindung ist das erste Ende des Halters etwa mittig zu dem auszurichtenden Optikkasten angeordnet. Dadurch wird erreicht, daß in einer neutralen Position das Visier nicht über die Seitenbegrenzungen des Optikkasten hinausragt und bei Transport oder Lagerung des Fahrzeugscheinwerferprüfgerätes vor Beschädigungen relativ sicher ist.

Weitere Aufgabe der Erfindung ist es, ein Verfahren zum Ausrichten der optischen Achse eines ortsveränderlichen Fahrzeugscheinwerferprüfgerätes parallel zu einer Fahrzeuglängsachse mit Hilfe einer Visiereinrichtung so zu verbessern, daß das Fahrzeugscheinwerferprüfgerät vor beiden Fahrzeugscheinwerfern schnell und genau ausgerichtet werden kann.

Diese Aufgabe wird erfindungsgemäß dadurch gelöst, daß das Visier zum Anvisieren quer zur optischen Achse in einer horizontalen Ebene zur Fahrzeuglängsachse hin in eine Visierstellung verschoben wird.

Durch die horizontale Verschiebung des Visiers quer zur optischen Achse kann das Visier vor beiden Fahrzeugscheinwerfem in eine optimale Position gebracht werden, so daß jeweils eine schnelle und genaue Ausrichtung des Fahrzeugscheinwerferprüfgerätes möglich ist.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine räumliche Darstellung eines vor einem Scheinwerfer positionierten Fahrzeugscheinwerferprüfgerätes mit Visiereinrichtung,
- Figur 2:: eine Draufsicht auf ein weiteres Fahrzeugscheinwerferprüfgerät mit Visiereinrichtung,
- Figur 3:: eine Rückansicht des Fahrzeugscheinwerferprüfgerätes von Figur 2,

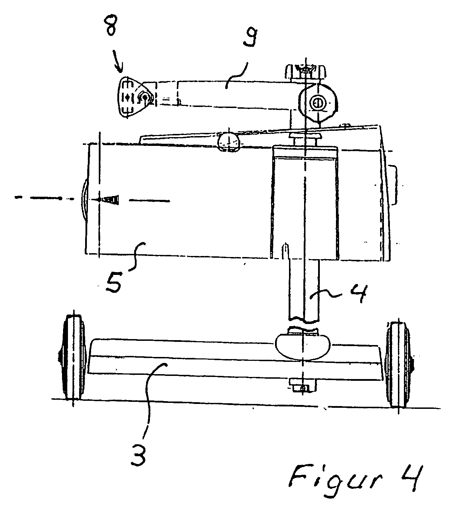

- Figur 4:: eine Seitenansicht des Fahrzeugscheinwerferprüfgerätes von Figur 2,
- Figur 5:: eine Seitenansicht der Visiereinrichtung von Figur 4, in vergrößerter Darstellung im Schnitt und

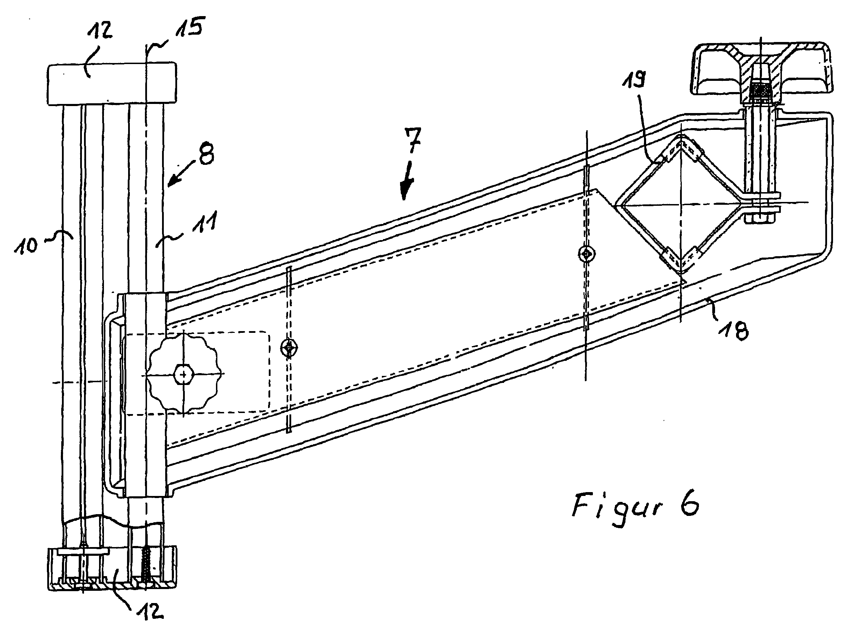

- Figur 6:: eine Untersicht der Visiereinrichtung von Figur 5, teilweise im Schnitt.

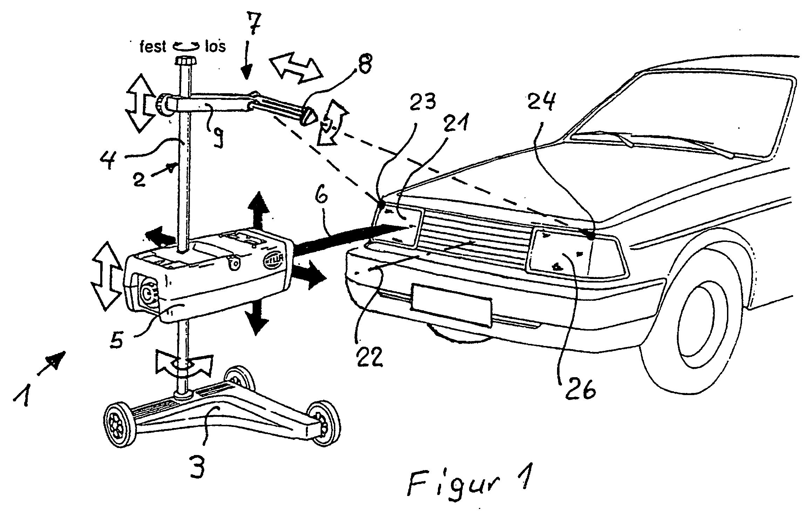

Ein Fahrzeugscheinwerferprüfgerät (1) besteht im wesentlichen aus einem ortsbeweglichen Gestell (2) mit einem Gerätefuß (3) und einer vertikalen Säule (4), einem an der vertikalen Säule (4) höhenverstellbar angeordneten Optikkasten (5) mit einer optischen Achse (6) und einer Visiereinrichtung (7), siehe Figur 1.

Die vertikale Säule (4) weist einen quadratischen Querschnitt auf und ist an ihren in vertikaler Richtung unterem Ende über einen zylindrischen Ansatz um ihre Längsachse schwenkbar mit dem Gerätefuß (3) verbunden. Durch den quadratischen Querschnitt der Säule (4) ist der in Längsrichtung der vertikalen Säule (4) verschiebbare Optikkasten (5) in horizontaler Richtung verdrehsicher mit der vertikalen Säule (4) verbunden.

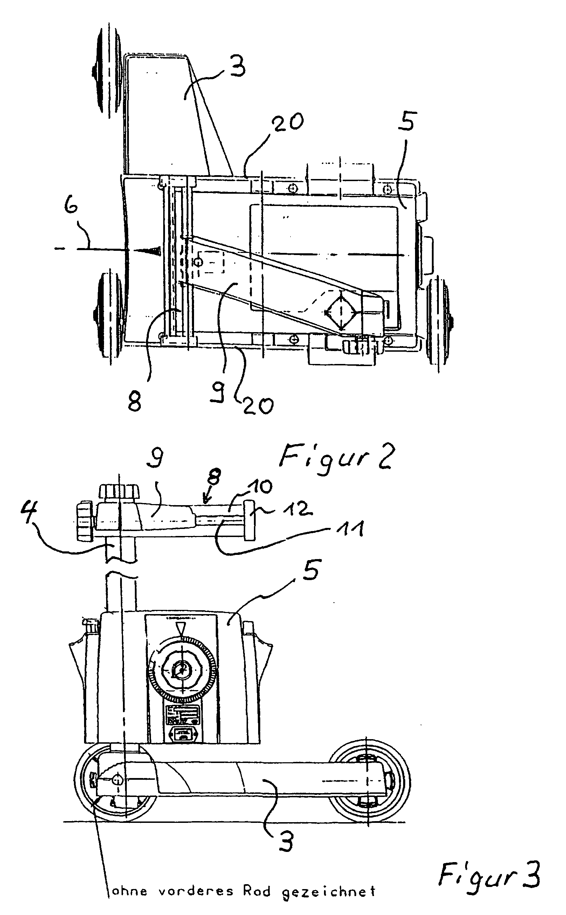

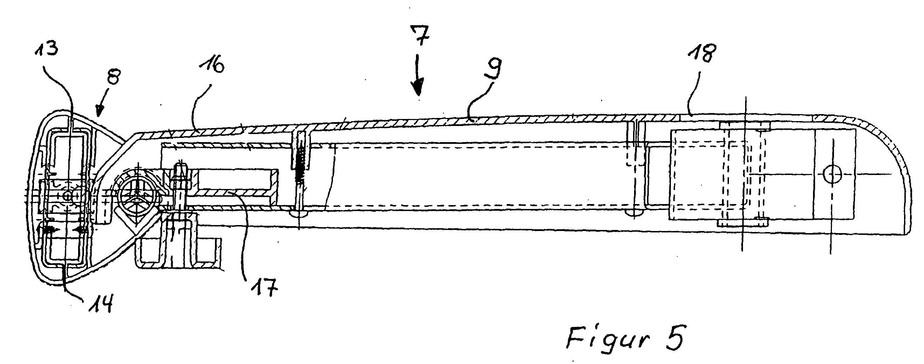

Wie die Figur 2 und Figur 3 zeigen, besteht die Visiereinrichtung (7) im wesentlichen aus einem Visier (8) und einem Halter (9). Das Visier (8) besteht aus einem Visierkörper (10) und einem parallel zu dem Visierkörper (10) angeordneten zylindrischen Achskörper (11), der über Endstücke (12) mit dem Visierkörper (10) verbunden ist. Der Visierkörper (10) weist einen oberen Sehschlitz (13) und einen gegenüberliegenden unteren Sehschlitz (14) auf. Der zylindrische Achskörper (11) ist in Richtung seiner Längsachse (15) verschieblich mit einem ersten Ende (16) über eine Klemmvorrichtung (17) verbunden, siehe Figur 5. Das Visier (8) ist gegenüber dem Halter (9) um die Längsachse (15) des Achskörpers (11) verschwenkbar. Der Halter (9) ist an seinem dem ersten Ende (16) abgewandten zweiten Ende (18) über eine zweite Klemmvorrichtung (19) mit der vertikalen Säule (4) verdrehsicher gegenüber der Längsachse der vertikalen Säule (4) verbunden. Der Halter (9) ist mit dem Visier (8) in Längsrichtung der vertikalen Säule (4) höhenverstellbar und durch die zweite Klemmvorrichtung (19) festklemmbar. Das erste Ende (16) des Halters (9) ist mittig zu den Seitenbegrenzungen (20) des Optikkasten (5) angeordnet, so daß das Visier (8) in einer neutralen Stellung nicht über die Seitenbegrenzungen (20) hinausragt.

Zum Ausrichten des Fahrzeugscheinwerferprüfgerätes (1) wird der Optikkasten (5) mittig vor einem ersten Fahrzeugscheinwerfer (21) positioniert. Das Visier (8) wird zu einer Fahrzeuglängsachse (22) hin in eine Visierstellung gebracht, bei der das der Fahrzeuglängsachse (22) abgewandte Endstück (12) des Visiers (8) gegen das erste Ende (16) des Halters (9) anschlägt. Das Ausrichten der optischen Achse (6) des Optikkasten (5) parallel zur Fahrzeuglängsachse (22) erfolgt mit Hilfe des Visiers (8). Hierbei visiert die Bedienperson mit dem Visier (8) zwei auf gleicher Höhe und symmetrisch zur Fahrzeuglängsachse liegende markante Punkte (23, 24) der Fahrzeugkarosserie (25) an. Sobald diese beiden Punkte (23, 24) durch die beiden Sehschlitze (13, 14) zu sehen sind, ist das Fahrzeugscheinwerferprüfgerät (1) in Bezug auf die Fahrzeuglängsachse (22) richtig ausgerichtet. Nach erfolgter Prüfung des ersten Fahrzeugscheinwerfers (21) wird das Fahrzeugscheinwerferprüfgerät (1) vor dem zweiten Fahrzeugscheinwerfer (26) positioniert. Das Visier (8) wird zur Fahrzeuglängsachse (22) hin soweit verschoben, daß das dem zweiten Fahrzeugscheinwerfer (26) benachbarte und von der Fahrzeuglängsachse (22) abgewandte Endstück (12) gegen das erste Ende (16) des Halters (9) anschlägt, und der Optikkasten (5) wird mit seiner optischen Achse (6) erneut parallel zur Fahrzeuglängsachse (22) ausgerichtet, so daß die Prüfung des zweiten Fahrzeugscheinwerfer (26) durchgeführt werden kann.

## Patentansprüche

1. Visiereinrichtung zum Ausrichten der optischen Achse (6) eines ortsveränderlichen Fahrzeugscheinwerferprüfgerätes (1) zu einer Fahrzeuglängsachse (22) mit einem quer zur optischen Achse (6) angeordneten Visier (8), das mit dem Fahrzeugscheinwerferprüfgerät (1) verbunden ist, **dadurch gekennzeichnet, daß** das Visier (8) quer zur optischen Achse (6) in einer horizontalen Ebene verschiebbar ist.

2. Visiereinrichtung nach Anspruch 1, **dadurch gekennzeichnet, daß** das Visier (8) einen Visierkörper (10) mit zwei einander gegenüberliegenden Sehschlitzen (13, 14) aufweist, zu dem in einem Abstand ein parallel in der horizontalen Ebene verlaufender Achskörper (11) angeordnet ist, der an seinen Enden über Endstücke (12) mit dem Visierkörper (10) verbunden ist.

3. Visiereinrichtung nach Anspruch 2, **dadurch gekennzeichnet, daß** der Achskörper (11) des Visiers (8) mit einem ersten Ende (16) eines Halters (9) längsverschieblich und schwenkbar verbunden ist.

4. Visiereinrichtung nach Anspruch 3, **dadurch gekennzeichnet, daß** der Achskörper (11) über eine Klemmvorrichtung (17) mit dem Halter (9) festklemmbar verbunden ist.

5. Visiereinrichtung nach Anspruch 3 oder 4, **dadurch gekennzeichnet, daß** der Halter (9) an seinem dem ersten Ende (16) abgewandten zweiten Ende (18) mit einer vertikalen Säule (4) des Fahrzeugscheinwerferprüfgerätes (1) in vertikaler Richtung verschieblich und gegenüber der Säule (4) verdrehsicher verbunden ist.

6. Visiereinrichtung nach Anspruch 5, **dadurch gekennzeichnet, daß** der Halter (9) mit der vertikalen Säule (4) festklemmbar verbunden ist.

7. Visiereinrichtung nach einem der Ansprüche 3 bis 6, **dadurch gekennzeichnet, daß** das erste Ende (16) des Halters (9) etwa mittig zu einem auszurichtenden Optikkasten (5) angeordnet ist.

8. Visiereinrichtung nach einem der Ansprüche 3 bis 7, **dadurch gekennzeichnet, daß** in einer Visierstellung das der Fahrzeuglängsachse (22) abgewandte Endstück (12) des Visiers (8) gegen das erste Ende (16) des Halters (9) anschlägt.

9. Verfahren zum Ausrichten der optischen Achse (6) eines ortsveränderlichen Fahrzeugscheinwerferprüfgerätes (1) parallel zu einer Fahrzeuglängsachse (22), bei dem das Fahrzeugscheinwerferprüfgerät (1) vor einem Fahrzeugscheinwerfer (21, 26) positioniert wird und mit einem Visier (8) zwei in einer horizontalen und senkrecht zur Fahrzeuglängsachse (22) verlaufenden Linie liegende Punkte (23, 24) einer Fahrzeugkarossierie (25) anvisiert werden, **dadurch gekennzeichnet, daß** das Visier (8) zum Anvisieren quer zur optischen Achse (6) in einer horizontalen Ebene zur Fahrzeuglängsachse (22) hin in eine Visierstellung verschoben wird.

## Claims

1. Sighting device for aligning the optical axis (6) of a mobile vehicle headlight testing apparatus (1) to a vehicle longitudinal axis (22), having a sight (8) arranged transverse to the optical axis (6), said sight being linked to the vehicle headlight testing apparatus (1), **characterised in that** the sight (8) is displaceable transverse to the optical axis (6) in a horizontal plane.

2. Sighting device according to Claim 1, **characterised in that** the sight (8) has a sight body (10) with two mutually opposed viewing slits (13, 14) to which an axis body (11) is arranged running at a distance parallel in the horizontal plane, said axis body being linked at its ends by means of end pieces (12) to the sight body (10).

3. Sighting device according to Claim 2, **characterised in that** the axis body (11) of the sight (8) is linked to a first end (16) of a holder (9), longitudinally displaceable and rotatable.

4. Sighting device according to Claim 3, **characterised in that** the axis body (11) is linked in clampable manner to the holder (9) by means of a clamping device (17).

5. Sighting device according to Claim 3 or 4, **characterised in that** the holder (9) is linked at its second end (18) facing away from the first end (16) to a vertical column (4) of the vehicle headlight testing apparatus (1) displaceable in the vertical direction and non-rotatably relative to the column (4).

6. Sighting device according to Claim 5, **characterised in that** the holder (9) is linked in clampable manner to the vertical column (4).

7. Sighting device according to one of the claims 3 to 6, **characterised in that** the first end (16) of the holder (9) is arranged approximately centrally to an optics case (5) to be aligned.

8. Sighting device according to one of the claims 3 to 7, **characterised in that** in a sighting position, the end piece (12) of the sight (8) facing away from the vehicle longitudinal axis (22) comes to rest against the first end (16) of the holder (9).

9. Method for aligning the optical axis (6) of a mobile vehicle headlight testing apparatus (1) parallel to a vehicle longitudinal axis (22), whereby the vehicle headlight testing apparatus (1) is positioned in front of a vehicle headlight (21, 26) and with a sight (8), two points (23, 24) of a vehicle bodywork (25) lying on a line running horizontally and perpendicular to the vehicle longitudinal axis (22) are sighted, **characterised in that** for sighting, the sight (8) is displaced transverse to the optical axis (6) in a horizontal plane towards the vehicle longitudinal axis (22) into a sighting position.

## Revendications

1. Dispositif de visée pour aligner l'axe optique (6) d'un appareil transportable de contrôle des phares de véhicules (1) par rapport à l'axe longitudinal (22) du véhicule, comportant un viseur (8) agencé transversalement à l'axe optique (6), lequel est relié à l'appareil de contrôle des phares de véhicules (1), **caractérisé en ce que** le viseur (8) peut être déplacé dans un plan horizontal transversalement à l'axe optique (6).

2. Dispositif de visée selon la revendication 1, **caractérisé en ce que** le viseur (8) présente un corps de viseur (10) avec deux fentes de visée (13, 14) opposées l'une à l'autre, par rapport auquel est agencé à distance un corps d'axe (11) s'étendant parallèlement dans le plan horizontal et qui est relié à ses extrémités au corps de viseur (10) par des pièces d'extrémité (12).

3. Dispositif de visée selon la revendication 2, **caractérisé en ce que** le corps d'axe (11) du viseur (8) est relié en déplacement longitudinal et à pivotement avec une première extrémité (16) d'un support (9).

4. Dispositif de visée selon la revendication 3, **caractérisé en ce que** le corps d'axe (11) est relié de manière à pouvoir être immobilisé avec le support (9) via un dispositif de serrage (17).

5. Dispositif de visée selon l'une ou l'autre des revendications 3 et 4, **caractérisé en ce qu'**à sa deuxième extrémité (18) détournée de la première extrémité (16), le support (9) est relié de manière à pouvoir se déplacer en direction verticale, avec une colonne verticale (4) de l'appareil de contrôle des phares de véhicule (1) mais sans possibilité de rotation par rapport à la colonne (4).

6. Dispositif de visée selon la revendication 5, **caractérisé en ce que** le support (9) est relié à la colonne verticale (4) de manière à pouvoir être immobilisé.

7. Dispositif de visée selon l'une des revendications 3 à 6, **caractérisé en ce que** la première extrémité (16) du support (9) est agencée approximativement au milieu par rapport à une boîte optique (5) à aligner.

8. Dispositif de visée selon l'une des revendications 3 à 7, **caractérisé en ce que** dans une position de visée, la pièce d'extrémité (12) du viseur (8), qui est détournée de l'axe longitudinal (22) du véhicule, vient buter contre la première extrémité (16) du support (8).

9. Procédé d'alignement de l'axe optique (6) d'un appareil transportable de contrôle des phares de véhicules (1) parallèlement à l'axe longitudinal (22) du véhicule, dans lequel l'appareil de contrôle des phares de véhicules (1) est positionné devant un phare (21, 26) de véhicule et deux points (23, 24) d'une carrosserie (25) de véhicule, situés dans une ligne horizontale et perpendiculaire à l'axe longitudinal (22) du véhicule sont visés au moyen d'un viseur (8), **caractérisé en ce que** pour effectuer la visée, le viseur (8) est déplacé transversalement à l'axe optique (6) dans un plan horizontal en direction de l'axe longitudinal (22) du véhicule jusque dans une position de visée.
